Europäisches Patentamt

(19) European Patent Office

Office européen des brevets

(11) Publication number: **0 235 967**
**B1**

(12) **EUROPEAN PATENT SPECIFICATION**

(45) Date of publication of the patent specification: **31.10.90**

(51) Int. Cl.⁵: **B60N 2/52**

(21) Application number: **87301056.5**

(22) Date of filing: **06.02.87**

(54) Pneumatically cushioned vehicle seat(s) and apparatus and method to adjust the same.

(30) Priority: **28.02.86 US 834425**

(43) Date of publication of application:
**09.09.87 Bulletin 87/37**

(45) Publication of the grant of the patent:
**31.10.90 Bulletin 90/44**

(84) Designated Contracting States:
**DE GB**

(56) References cited:
DE-C- 3 505 089
GB-A- 1 276 667
US-A- 3 326 601
US-A- 3 770 315

(73) Proprietor: **GENERAL MOTORS CORPORATION,**
**General Motors Building 3044 West Grand Boulevard,**
**Detroit Michigan 48202(US)**

(72) Inventor: **Horvath, Zolton Louis, 30715 River Crossing,**
**Birmingham Michigan 48010(US)**
Inventor: **Kavanagh, Gary Allen, 25294 Koontz, Roseville**
**Michigan 48066(US)**
Inventor: **Manning, Steven Frederick, 40012 Crosswinds,**
**Novi Michigan 48050(US)**
Inventor: **Pyszel, Ronald Joseph, 34606 Greentrees,**
**Sterling Heights Michigan 48077(US)**
Inventor: **Rogers, Lloyd Walker, 53606 Wolf, Utica**
**Michigan 48077(US)**
Inventor: **Schlaps, Edgar Harry, 61313 Miriam Drive,**
**Washington Michigan 48094(US)**

(74) Representative: **Denton, Michael John et al, Patent**
**Section Vauxhall Motors Limited 1st Floor Gideon**
**House 26 Chapel Street, Luton Bedfordshire**
**LU1 2SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to vehicle seats with an adjustable pneumatic cushion (sometimes referred to as bladders) as specified in the precharacterising portion of claim 1 and shown in US-A 3,326,601. More particularly the present invention relates to vehicle seats with adjustable pneumatic cushions powered by an on board motorized air supply.

It is known in the art to provide vehicle seats with attached pneumatic cushions to increase driver comfort. It is also well known in the art to provide pneumatic cushions which may be adjusted to a desired firmness by adding air from a vehicle borne artificially powered air supply. An example of the above is shown in US-A 3,326,601.

The arrangement disclosed therein is limited in that to deflate the pneumatic cushion, the pneumatic cushion must be vented to the atmosphere. Because the vehicle seat is deflated by simply venting the pneumatic cushion to the atmosphere, the vehicle operator must push against the pneumatic cushion to deflate it. The required push is often inconvenient due to the fact that many pneumatic cushions are prefilled with a porous foam material. It is especially inconvenient for the vehicle occupant to push against the vehicle seat to deflate the pneumatic cushion when the pneumatic cushion is used in a head rest area.

To overcome the above noted and other problems the present invention is brought forth. To this end, a vehicle seat in accordance with the present invention is characterised over US-A 3,326,601 by the features specified in the characterising portion of Claim 1.

The present invention is a vehicle seat having adjustable pneumatic cushions and an arrangement and method to control the inflation or deflation of the pneumatic cushions. The present invention provides a vehicle seat having a pneumatic cushion selectively connected with a reversible pump via a solenoid operated valve. The present invention allows the seat occupant to selectively add pressurized air to the pneumatic cushion, or if desired decrease the firmness of the pneumatic cushion by allowing the reversible pump to create a vacuum, thereby removing air from the pneumatic cushion. No force is required by the seat occupant to evacuate the air from the pneumatic cushion. The seat occupant is freed from the requirement of pushing against the pneumatic cushion to remove the air from the same. By using a single reversible air pump for inflation and deflation, the disadvantages of US-A 3,326,601 are overcome at little or no extra cost.

A particular object of the present invention is to provide a vehicle seat with attached pneumatic cushions with a valve for selective fluid communication of the pneumatic cushions with a means (such as an air pump) of powered inflation and deflation.

Further, the present invention provides a method of adjusting a vehicle seat pneumatic cushion by opening a valve to allow fluid communication between the pneumatic cushion and a reversible air pump, pumping air into the pneumatic cushion, closing the valve to prevent fluid communication with the reversible air pump, opening the valve to allow fluid communication with the reversible air pump and pumping air from the cushion.

Further still, the present invention can provide a vehicle seat having a pneumatic cushion as heretofore described and also having pressure regulator means to protect the pneumatic cushion.

The present invention may be used in a vehicle seat combination having at least two vehicle seats including at least two pneumatic cushions attached with each vehicle seat, an individual and separate valve for at least two of the pneumatic cushions of each vehicle seat for selectively allowing fluid communication with the pneumatic cushions, a common air pump for filling and evacuating the pneumatic cushions, and a manually activated (electrical) switch for controlling the valve and the air pump having a mode to control each said vehicle seat, and pressure regulator means to cut off the air pump and to close the valve in response to the pressure in a pneumatic cushion and to prevent reactivation of the air pump until the electrical switch is deactivated and clear means for evacuating the pneumatic cushions of an individual vehicle seat independent of the mode of the electrical switch.

This invention will now be described, by way of example, with reference to the accompanying drawings.

Figure 1 is a perspective view of a vehicle seat of the present invention;

Figure 2 is a schematic diagram of the pneumatic apparatus of the present invention;

Figure 3 is a schematic diagram of the switching arrangement of a preferred embodiment of the present invention;

Figure 4 is a schematic diagram of an alternative preferred embodiment of the switching arrangement of the present invention; and

Figure 5 is a schematic diagram of an alternative preferred embodiment of the switching arrangement of the present invention used with a combination of vehicle seats,

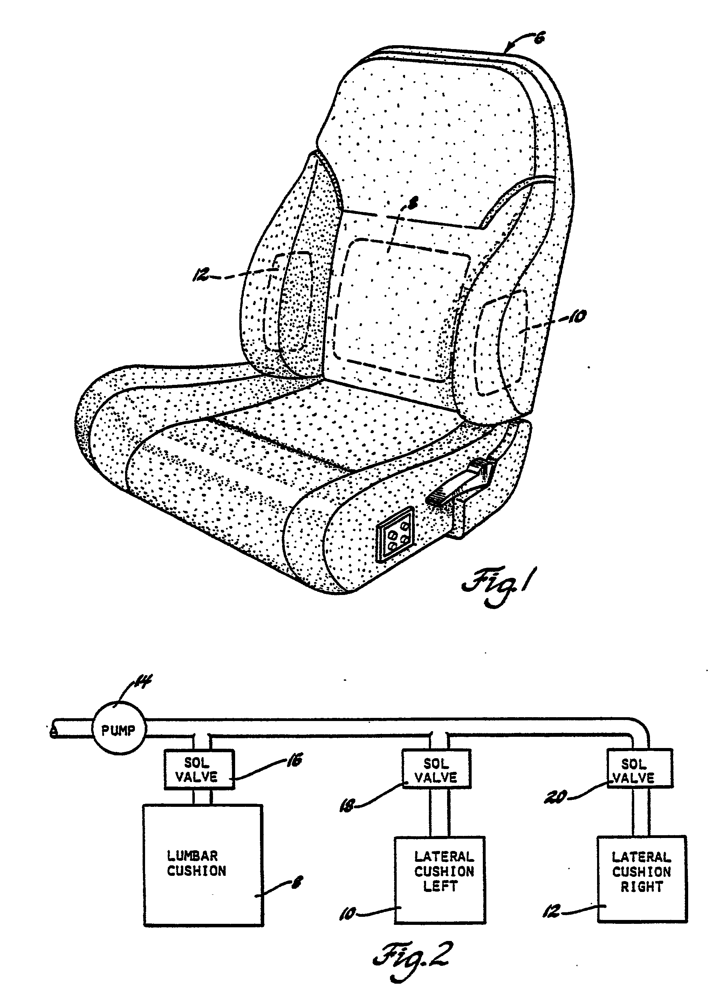

Referring to Figures 1 and 2, the vehicle seat 6 of the present invention is comprised of several elements. The vehicle seat 6 has attached thereto internally or externally a lumbar pneumatic bladder or cushion 8 and lateral pneumatic cushions 10 and 12.

Pneumatically connected with the pneumatic cushions 8, 10 and 12 is an air pump 14 which is artificially powered and reversible. Between the air pump 14 and the pneumatic cushions 8, 10 and 12 are valves 16, 18 and 20 respectively. The valves 16, 18 and 20 allow for selective fluid communication between the pneumatic cushions 8-12 and the air pump 14. Typically valves 16, 18 and 20 will be solenoid activated valves biased in the shut or closed position. If desired, air pump 14 can be a vane pump. Also air pump 14 can be replaced by one pump for inflation and one pump for deflation.

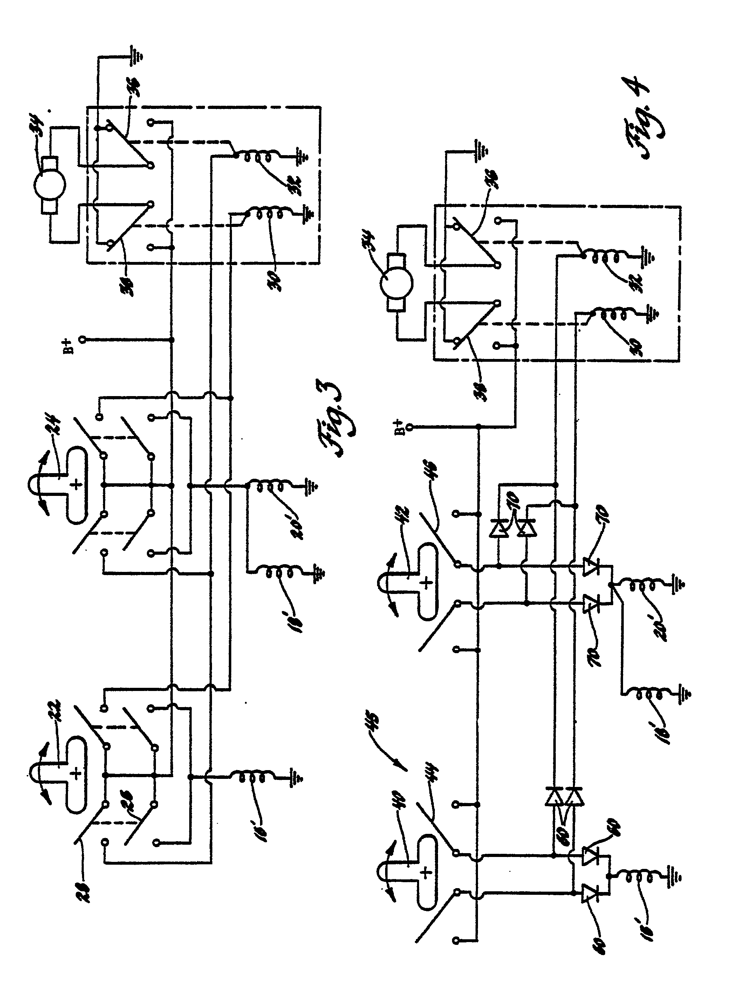

Referring to Figure 3, the switching arrangement of the present invention has two electrical switches 22 and 24 which are double pole, double throw. Electrical switch 22 has double contacts 28 and 26. Contact 28 activates the operation of relays 30 and 32 for a reversible motor 34 of air pump 14. Contact 26 activates the solenoid 16' of valve 16 which controls the lumbar pneumatic cushion 8. It is usually desirable for electrical switch 22 to be biased in a neutral position.

The electrical switch 24 operates in a similar fashion as does electrical switch 22 except that it is used for simultaneously controlling both the solenoids 18' and 20' of valves 18 and 20 of left and right lateral pneumatic cushions 10 and 12.

In operation, displacing electrical switch 22 in a counterclockwise direction activates solenoid 16' and simultaneously activates the relay 32 to start reversible motor 34. Activation of relay 32 causes a contact 36 to make contact with a voltage supply B+ and air pump 14 will begin to fill lumbar pneumatic cushion 8. When the lumbar pneumatic cushion 8 reaches a desired inflation, the operator releases electrical switch 22 and solenoid 16' and relay 32 are deactivated. If the operator fails to discontinue the filling operation, there is provided means for venting any excess air to the atmosphere to prevent damage to the lumbar pneumatic cushion 8.

When it is desired to release air from the lumbar pneumatic cushion 8, the electrical switch 22 can be rotated in a clockwise direction thereby again opening valve 16 and simultaneously starting reversible motor 34 in the opposite direction via relay 30 and contact 38. In like manner, electrical switch 24 controls the operation of the two lateral pneumatic cushions 10 and 12 through valves 18 and 20. If desired, the lateral pneumatic cushions 10 and 12 could be pneumatically connected and only one valve would be required.

Referring to Figure 4, an alternative switching arrangement 45 is provided utilizing switches 40 and 42 which are double pole, single throw with single contacts 44 and 46. To eliminate the need for double contacts, diode banks 60 and 70 are added. The operation of switching arrangement 45 is identical to that shown in Figure 3.

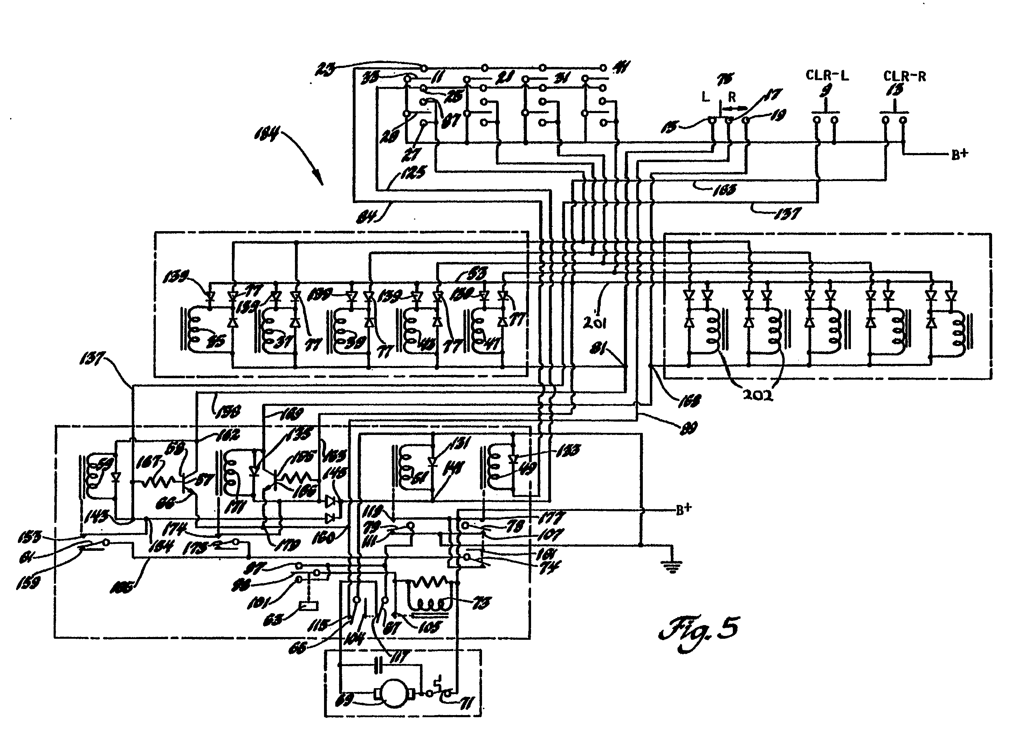

Referring to Figure 5, there is provided a switching and pumping arrangement 184 for a car having a combination of vehicle seats according to the present invention. As illustrated, the two seats designated left and right share a common set of selector switches 11, 21, 31 and 41, which are normally open and accessible to the seat occupant, for pneumatic cushion adjustment.

The left-right mode switch 75 permits the seating combination to share a common set of selector switches. When it is desired to adjust the left seat, the left-right mode switch 75 will be placed on electrical contacts 15 and 17. To operate the right seat, left-right mode switch 75 will be moved to a position over electrical contacts 17 and 19. Electrical contact 17 provides a common ground for electrical contacts 15 and 19 via line 89, contact 115 and relay wiper 65.

Selector switch 41 controls solenoid coil 47 of a valve for a pneumatic cushion, selector switch 31 controls solenoid coil 43, selector switch 21 controls solenoid coil 39 and selector switch 11 controls the separate solenoid coils 37 and 35 respectively of two separate pneumatic cushions. Each pneumatic cushion has its own individual solenoid valve in order to provide pneumatic isolation between the pneumatic cushions.

When it is desired to inflate the pneumatic cushion which is connected with the valve controlled by solenoid coil 37, the selector switch 11 (which is double pole, double throw, double contact type) is raised upward. The above will cause a relay wiper 29 to make contact with a contact 87 electrically connecting a contact 27 with voltage supply B+. Current will then flow through diodes 77 then through solenoids coils 37 and 35 thereby activating the valves to the open position. The connection to ground is made via junction 81 back up to electrical contacts 15 and 17 of the left-right mode switch 75.

For activation of reversible motor 69 for inflation, selector switch 11 has a relay wiper 33 which makes contact with contact 23, connecting contact 23 with B+. Current will then flow through line 84 to relay coil 49. Relay coil 49 causes relay wiper 78 to leave contact 107 and connect with B+ via contact 177 thereby connecting reversible motor 69 via circuit breaker 71 with current. Reversible Motor 69 is contacted via normally closed relay wiper 67 with relay wiper 79. Relay wiper 79 in contact with contact 111 connects the relay wiper 67 with ground. The reversible motor 69 will continue to inflate a pneumatic cushion until selector switch 11 is released by the vehicle operator.

Pressure regulator switch 63 is provided to protect the pneumatic cushions from excessive inflation or deflation. Pressure regulator switch 63 senses the air pressure within the pneumatic cushions putting out a signal which controls relay wiper 98. (Note: Pressure regulator switch 63 may sense the air pressure within the pneumatic cushion itself, or may indirectly sense the air pressure via an air supply manifold feeding into the pneumatic cushion).

At a predetermined pressure the relay wiper 98 will be pushed upwards by pressure regulator switch 63 to make contact with contact 97 (connected to ground via relay wiper 79). The above will cause current to flow through relay coil 73 which controls relay wipers 67 and 65. (Note: Both relay wipers are spring biased in the position illustrated). Relay wiper 67 will be brought into contact with contact 105. When relay wiper 67 switches from contact 117 to contact 105 the electrical connection to reversible motor 69 is broken and the reversible motor stops inflation. Relay wiper 67 is now grounded via relay wiper 98 and contact 97. Therefore relay coil 73 will be continually energized. The effect of the above setup prevents the reversible motor 69 from being reactivated unless the activated selector switch is returned to the neutral position to cause relay wiper 78 to return to a position of contact with contact 107.

Relay coil 73 also places relay wiper 65 in contact with contact 104 thereby open circuiting electrical contact 17 of left-right mode switch 75. With the ground open circuited, all of the valves will close. Since relay wiper 65 cannot return to contact 115 until relay coil 73 is deactivated, all of the valves to the pneumatic cushions will remain in a closed position until the selector switch is deactivated.

Power shut off means is provided to prevent a reactivation of the reversible motor 69 just because the air pressure within the pneumatic cushion has been lowered. If the reactivation of the valves and pneumatic motor were possible, after power shut off, the vehicle operator could cause the reversible motor to continue to turn on and off in response to the increasing and decreasing air pressure within the pneumatic cushion. Cycling of the reversible motor would be highly undesirable. Therefore the switching and pumping arrangement 184 forces the vehicle operator to release the selector switch to reactivate the valves or the reversible motor whenever the reversible motor has been shut off in response to a signal from the pressure regulator switch 63.

When it is desired to lower the inflation of a pneumatic cushion associated with solenoid coils 37 and 35, selector switch 11 is moved downwards and relay wiper 29 is brought into contact with contact 27 to operate the solenoid coils 35 and 37 as previously described. The reversible motor 69 is activated by current from relay wiper 33, via lead 25, line 125 activating the relay coil 51 which pulls relay wiper 79 into contact with contact 119. Current then flows through reversible motor 69 in the opposite direction as previously described, causing reversible motor 69 to rotate in the opposite direction withdrawing air from the pneumatic cushions. If selector switch 11 is held open by the vehicle operator, reversible motor 69 will continue to operate until such a time as relay wiper 98 is brought in contact with lead 101 by the pressure regulator switch 63 thereby activating relay coil 73 causing relay wiper 67 to make contact with contact 105 and relay wiper 65 to make contact with contact 104 thereby deactivating both the valves and the reversible motor until such time the selector switch 11 is brought back to a neutral position. Relay coil 73 will be continually activated as long as relay coil 51 is held open.

The switching and pumping arrangement 184 also has a clear or relief function to simultaneously remove the air from all of the pneumatic cushions of a given seat at the push of a single button. This clear function may be activated regardless of the position of left-right mode switch 75.

To clear all of the pneumatic cushions in the left seat, clear switch 9 is depressed, causing current to flow through line 137 which is electrically connected with line 53. From line 53 solenoid coils 35, 37, 39, 43 and 47 will be activated via the current flowing through diodes 139 thereby simultaneously opening up all of the valves connected with the various pneumatic cushions. The instantaneous connecting to ground is from junction 81 to electrical contacts 15 and 17.

Line 137 is also connected with relay coil 51 via electrical junctions 143, 145, and 141, thereby activating relay coil 51, and relay wiper 79 to mate with contact 119 causing reversible motor 69 to rotate in a direction to evacuate air from the pneumatic cushions as previously described.

The clear function can be activated by a signal of an infinitely short duration. Activation of normally open, left, clear switch 9 will cause the reversible motor 69 to continue to evacuate the pneumatic cushions until the pressure regulator switch 63 shuts off power to reversible motor 69.

The momentary activation of clear switch 9 will cause current to flow through relay coil 59 (grounded via line 138) to activate relay wiper 61 to leave contact 159 and mate with contact 153. Clear switch 9 will also cause a biasing current to flow (via line 137) into transistor 57 base 58. The "turn on" of transistor 57 causes current to flow from junction 143 (now connected to B+ via relay wipers 61 and 74) up relay coil 59 (keeping relay wiper 61 on contact 153) to ground via junction 162, transistor emitter 66 and junction 160. Junction 143 is retained at a higher voltage than transistor base 58 because of resistor 167. Therefore, transistor 57 · remains "turned on". Current from junction 154 will continually feed into junction 141 to activate relay coil 51 retaining reversible motor 69 in the deflation mode. Reversible motor 69 will continue to deflate the pneumatic cushions until pressure regulator switch 63 causes relay wiper 98 to move to a position to activate relay coil 73 to move relay wiper 65 to contact 104 (breaking reversible motor 69 from ground).

The valves will remain open due to current from junction 143, up line 137 to line 53, through the valves to junction 81 and ground via electrical contacts 15 and 17. The valves will be closed when relay coil 73 moves relay wiper 65 away from contact 115 to break the ground of electrical contact 17 (open circuit line 89).

A clear switch 13 for the right seat can also be activated regardless of the position of the left-right mode switch 75. Initial activation of normally open, right, clear switch 13 causes current to flow through line 163 and biases base 165 of transistor 155. The biasing of transistor 155 allows current to flow from junction 168 through line 169 to ground via transistor 155 and junction 179. Reversible motor 69 is now activated (via relay coil 51) and the left valves are activated because they are now connected to ground via line 169, transistor 155 and junction 179. After relay coil 171 is activated, relay wiper 173 is latched to contact 174, transistor 155 remains biased and ground for relay coil 171 continues through transistor 155 and junction 179. Therefore, the right seat pneumatic cushions will be evacuated until pressure regulator switch 63 deactivates the reversible motor 69 as previously described. The solenoid coils 202 of right valves will remain open from current from line 163 and line 201 to junction 168, line 169, transistor 155 and junction 179 to ground. The effect of the above switching arrangement allows the right clear switch 13 to be activated even when the left-right mode switch 75 is set in a position for the left seat only. The remainder of the operation of the right clear switch 13 is as previously described for the left clear switch 9.

It is sometimes desirable to interrupt the clear function. This allows the seat occupant to begin to adjust the vehicle seat before all air is removed. Also it is desirable to interrupt the clear function if a vehicle occupant activates the clear switch for another occupant's seat in error.

Relay coil 49 also controls relay wiper 74. When relay coil 49 is activated, relay wiper 74 is brought into contact with contact 161. During normal operation contact 161 is insignificant. However, if a clear function has been activated, relay wiper 74 will be pulled up to make contact with contact 161 thereby open circuiting line 185 therefore clearing the reversible motor 69 out of a clearing mode and deactivating relay coil 51. The effect of the above is that once a clear switch 9, 13 has been hit, the reversible motor 69 will function to evacuate the pneumatic cushions, however hitting any of the selector switches 11, 21, 31, or 41 to the inflation mode will cut off the clear function. Therefore the vehicle operator does not have to wait until the pressure regulator switch 63 cuts off when all the pneumatic cushions are inflated before stopping the clear functions to allow the vehicle seat to maintain its present firmness or to reinflate portions of the vehicle seat by operating separate selector switches to adjust by inflation to a desired firmness.

Diodes 131, 133 and 135 function mainly in the suppression of noise or the protection from voltage or current spikes for various elements. Diodes 139 are provided to prevent the activation of one valve from activating the other valves through the clearing function lines.

A major advantage of the present invention as heretofore described is that a vehicle switching arrangement can be made for one seat. By the simple addition of the valves functioning for the second seat, the left-right mode switch, and an additional clear switch, all of the elements of the pumping and the switching control are common for both seats. The above deletes the additional cost and expense of providing for a separate motor and switching arrangement. Although this combination has been described mainly for a left right seat combination, the invention is not limited to such but additional seating may be added as desired.

## Claims

1. A vehicle seat (6) selectively adjustable to a desired firmness by a seat occupant and comprising at least one pneumatic cushion (8, 10, 12) attached with the vehicle seat; an air pump (14) for filling the pneumatic cushion; and at least one valve (16, 18, 20) for selectively allowing fluid communication with the pneumatic cushion; characterised by an air pump (14) for evacuating the pneumatic cushion, and by an electrical switch (22, 24) accessible to and adjustable by the seat occupant for controlling the valve and the air pumps, wherein the air pumps are the same and comprise a reversible air pump (14).

2. A vehicle seat as claimed in claim 1 wherein the valve includes a solenoid valve (16′, 18′, 20′) biased in the closed position.

3. A vehicle seat as claimed in claim 1 or claim 2 comprising a plurality of pneumatic cushions (8, 10, 12) wherein each pneumatic cushion has an individual, associated valve (16, 18, 20).

4. A vehicle seat as claimed in claim 3 comprising a plurality of electrical switches (22, 24).

5. A vehicle seat as claimed in any one of claims 1 to 4 wherein the or each electrical switch (22, 24) is a double pole, double throw, electrical switch with double contacts.

6. A vehicle seat as claimed in claim 5 wherein the or each electrical switching (40, 42) is connected with a diode (60, 70).

7. A vehicle seat as claimed in claim 1 comprising sensing means (63) for determining the pressure within the pneumatic cushion (8, 10, 12) and generating a signal in response thereto; and power shut off means (98) for deactivating the air pump (14) in response to said signal when the pressure equals a predetermined value.

8. A vehicle seat as claimed in claim 7 wherein the power shut off means (98) deactivates the air pump (14) in response to said signal when the pressure within the pneumatic cushion (8, 10, 12) exceeds a maximum predetermined value or falls below a minimum value.

9. A vehicle seat as claimed in claim 7 further comprising means for preventing the reactivation of the air pump (14) until the electrical switch (11, 21, 31, 41) is deactivated.

10. A vehicle seat as claimed in claim 7 further including closing means for closing the valves in response to the signal when the pressure within the valves reaches a predetermined value.

11. A vehicle seat as claimed in any one of claims 1 to 10 comprising clear means (9, 13) for simultaneously activating all of the valves (16, 18, 20) and the air pump (14) for simultaneously evacuating all of the pneumatic cushions (8, 10, 12).

12. A vehicle seat as claimed in claim 11 wherein said clear means includes a normally open switch (9, 13) and can be activated by a single signal of an infinitely short duration wherein said clear means will continue to operate after said normally open switch has returned to an open position.

13. A vehicle seat as claimed in claim 12 comprising interrupting means for interrupting said clear means by activation of one of the electrical switches (11, 21, 31, 41).

14. A method of adjusting a pneumatic cushion (8, 10, 12) of a vehicle seat (6) utilizing an air pump (14) comprising: selectively opening, by an electrical switch (22, 24) accessible to and adjustable by a seat occupant, a valve (16–20) to allow fluid communication with the pneumatic cushion; pumping air to inflate the pneumatic cushion; closing a valve (16, 18, 20) to prevent fluid communication with the pneumatic cushion by an electrical switch (22, 24) accessible to and adjustable by the seat occupant; characterised by selectively opening, by an electrical switch (22, 24) accessible to and adjustable by the seat occupant, a valve (16, 18, 20) to allow fluid communication with the pneumatic cushion; and pumping air from the pneumatic cushion to deflate the pneumatic cushion.

## Patentansprüche

1. Fahrzeugsitz (26), der durch einen Benutzer des Sitzes wahlweise auf eine gewünschte Festigkeit einstellbar ist und mit mindestens einem an dem Fahrzeugsitz angebrachten Luftkissen (8, 10, 12); einer Luftpumpe (14) zum Füllen des Luftkissens; und mindestens einem Ventil (16, 18, 20), um wahlweise Fluidverbindung mit dem Luftkissen zuzulassen; gekennzeichnet durch eine Luftpumpe (14) zum Auspumpen des Luftkissens und durch einen elektrischen Schalter (22, 24), der für den Benutzer des Sitzes zugänglich und einstellbar ist zum Beeinflussen des Ventils und der Luftpumpen, worin die Luftpumpen die gleiche Luftpumpe sind und eine reversible Luftpumpe (14) umfassen.

2. Fahrzeugsitz nach Anspruch 1, bei dem das Ventil ein in Schließrichtung vorgespanntes Magnetventil (16', 18', 20') enthält.

3. Fahrzeugsitz nach Anspruch 1 oder 2, mit einer Vielzahl von Luftkissen (8, 10, 12), wobei jedes Luftkissen ein individuelles zugehöriges Ventil (16, 18, 20) besitzt.

4. Fahrzeugsitz nach Anspruch 3 mit einer Vielzahl von elektrischen Schaltern (22, 24).

5. Fahrzeugsitz nach einem der Ansprüche 1 bis 4, bei dem der oder jeder elektrische Schalter (22, 24) ein elektrischer zweipoliger Zweistellungsschalter ist.

6. Fahrzeugsitz nach Anspruch 5, bei dem der oder jeder elektrische Schalter (40, 42) mit einer Diode (60, 70) verbunden ist.

7. Fahrzeugsitz nach Anspruch 1 mit Fühlermittel (63) zum Bestimmen des Drucks in dem Luftkissen (8, 10, 12) und zum Erzeugen eines davon abhängigen Signals und mit Leistungs-Abschaltmittel (98) zum Entregen der Luftpumpe (14) in Abhängigkeit von dem Signal, wenn der Druck gleich einem vorbestimmten Druckwert ist.

8. Fahrzeugsitz nach Anspruch 7, bei dem das Leistungs-Abschaltmittel (98) die Luftpumpe (14) in Abhängigkeit von dem Signal entregt, wenn der Druck innerhalb des Luftkissens (8, 10, 12) einen vorbestimmten Druckwert überschreitet oder unter einen Minimalwert abfällt.

9. Fahrzeugsitz nach Anspruch 7, weiter mit Mittel zum Verhindern des Wiedereinschaltens der Luftpumpe (14), bis der elektrische Schalter (11, 21, 31, 41) entregt ist.

10. Fahrzeugsitz nach Anspruch 7, weiter mit Schließmitteln zum Schließen der Ventile in Abhängigkeit von dem Signal, wenn der Druck innerhalb der Ventile einen vorbestimmten Wert erreicht.

11. Fahrzeugsitz nach einem der Ansprüche 1 bis 10, mit Löschmitteln (9, 13) zum gleichzeitigen Aktivieren aller Ventile (16, 18, 20) und der Luftpumpe (14) zum gleichzeitigen Evakuieren aller Luftkissen (8, 10, 12).

12. Fahrzeugsitz nach Anspruch 11, bei dem das Löschmittel einen normal offenen Schalter (9, 13) enthält und durch ein einziges Signal von unbegrenzt kurzer Dauer aktiviert werden kann, wobei das Löschmittel seinen Betrieb fortsetzt, nachdem der normal offene Schalter in eine offene Stellung zurückgekehrt ist.

13. Fahrzeugsitz nach Anspruch 12 mit Unterbrechungsmittel zum Unterbrechen des Löschmittels durch Beaufschlagen eines der elektrischen Schalter (11, 21, 31, 41).

14. Verfahren zum Einstellen eines Luftkissens (8, 10, 12) eines Fahrzeugsitzes (6) unter Benutzung einer Luftpumpe (14), bei dem: wahlweise durch einen elektrischen, dem Benutzer des Sitzes zugänglichen und für ihn einstellbaren elektrischen Schalter (22, 24) ein Ventil (16-20) geöffnet wird, um eine Fluidverbindung mit dem Luftkissen zuzulassen; Luft zum Aufpumpen des Luftkissens eingepumpt wird: ein Ventil (16, 18, 20) geschlossen wird, um Fluidverbindung mit dem Luftkissen zu verhindern durch einen elektrischen Schalter (22, 24), der dem Benutzer des Sitzes zugänglich und für ihn einstellbar ist; dadurch gekennzeichnet, daß wahlweise durch einen elektrischen Schalter (22, 24), der für den Benutzer des Sitzes zugänglich und einstellbar ist, Ventil (16, 18, 20) geöffnet wird, um Fluidverbindung mit dem Luftkissen zuzulassen, und Luft aus dem Luftkissen gepumpt wird, um das Luftkissen abzulassen.

## Revendications

1. Siège (6) de véhicule réglable de manière sélective à une fermeté désirée par un occupant et comprenant au moins un coussin pneumatique (8, 10, 12) fixé au siège du véhicule; une pompe à air (14) destinée à remplir le coussin pneumatique; et au moins une vanne (16, 18, 20) destinée à permettre de manière sélective la communication fluidique avec le coussin pneumatique; caractérisé par une pompe à air (14) destinée à vider le coussin pneumatique et par un commutateur électrique (22,24) accessible et réglable par l'occupant du siège en vue de commander la vanne et les pompes à air, les pompes à air étant les mêmes et comprenant une pompe à air réversible (14).

2. Siège de véhicule selon la revendication 1, dans lequel la vanne comprend une vanne magnétique (16', 18', 20') qui est polarisée dans la position fermée.

3. Siège de véhicule selon la revendicationa 1 ou la revendication 2, comprenant une pluralité de coussins pneumatiques (8, 10, 12), dans lequel chaque coussin pneumatique comporte une vanne associée individuelle (16, 18, 20).

4. Siège de véhicule selon la revendication 3, comprenant une pluralité de commutateurs électriques (22, 24).

5. Siège de véhicule selon l'une quelconque des revendications 1 à 4, dans lequel le commutateur électrique ou chacun des commutateurs électriques (22, 24) est un commutateur inverseur bipolaire à contacts doubles.

6. Siège de véhicule selon la revendication 5, dans lequel le commutateur électrique ou chacun des commutateurs électriques (40, 42) est relié à une diode (60, 70).

7. Siège de véhicule selon la revendication 1, comprenant des moyens de détection (63) destinés à déterminer la pression à l'intérieur du coussin pneumatique (8, 10, 12) et à engendrer un signal en réponse à ladite pression; et des moyens de coupure d'alimention (98) destinés à désactiver la pompe à air (14) en réponse audit signal lorsque la pression est égale à une valeur prédéterminée.

8. Siège de véhicule selon la revendication 7, dans lequel les moyens de coupure d'alimentation (98) désactivent la pompe à air en réponse audit signal lorsque la pression· à l'intérieur du coussin pneumatique (8, 10, 12) exède une valeur maximale prédéterminée ou tombe en dessous d'une valeur minimale.

9. Siège de véhicule selon la revendication 7, comprenant en outre des moyens pour empêcher la réactivation de la pompe à air (14) après que le commutateur électrique (11, 21, 31, 41) ait été désactivé.

10. Siège de véhicule selon la revendication 7, comprenant en outre de moyens de fermeture pour fermer les vannes en réponse au signal lorsque la pression dans les vannes atteint une valeur prédéterminée.

11. Siège de véhicule selon l'une quelconque des revendications 1 à 10, comprenant des moyens de vidange (9, 13) destinés à activer de manière simultanée toutes les vannes (16, 18, 20) et la pompe à air (14) pour vider simultanément tous les coussins pneumatiques (8, 10, 12).

12. Siège de véhicule selon la revendication 11, dans lequel lesdits moyens de vidange comprennent un commutateur normalement ouvert (9, 13) et peuvent être activés par un simple signal d'une durée extrêmement courte, lesdits moyens de vidange continuant à fonctionner après que ledit commutateur normalement ouvert soit retourné à une position ouverte.

13. Siège de véhicule selon la revendication 12, comprenant des moyens d'interruption pour interrompre lesdits moyens de vidange par activation d'un des commutateurs électriques (11, 21, 31, 41).

14. Procédé de réglage d'un coussin pneumatique (8, 12) d'un siège (6) de véhicule utilisant une pompe à air (14) comprenant: une ouverture sélective par un commutateur électrique (22, 24) accessible et réglable par un occupant de siège d'une vanne (16–20) pour permettre la communication fluidique avec le coussin pneumatique; pompage d'air pour gonfler le coussin pneumatique; fermeture d'une vanne (16, 18, 20) pour éviter la communication fluidique avec le coussin pneumatique par un commutateur électrique (22, 24) accessible et réglable par l'occupant du siège; caractérisé par l'ouverture sélective, par un commutateur électrique (22, 24) accessible et réglable par l'occupant du siège, d'une vanne (16, 18, 20) pour permettre la communication fluidique avec le coussin pneumatique; et pompage d'air à partir du coussin pneumatique pour le dégonfler.

*Fig 1*

PUMP

SOL VALVE 16

SOL VALVE 18

SOL VALVE 20

LUMBAR CUSHION

LATERAL CUSHION LEFT

LATERAL CUSHION RIGHT

*Fig.2*

Fig. 3

Fig. 4

Fig. 5